# FASCICULE DE BREVET EUROPEEN

(11) **EP 2 286 094 B1**
(45) Date de publication et mention de la délivrance du brevet: **10.07.2013**
(21) Numéro de dépôt: 09741862.8
(22) Date de dépôt: 05.05.2009
(51) Int. Cl.: F16B 5/06

(54) **AGRAFE DE FIXATION DE DEUX PIÈCES L'UNE SUR L'AUTRE**
KLEMME ZUM ZUSAMMENHALTEN ZWEIER TEILE
CLIP FOR HOLDING TWO PARTS TOGETHER

(30) Priorité: 07.05.2008 FR 0802547
(43) Date de publication de la demande: 23.02.2011
(73) Titulaire: A. Raymond et Cie., 38000 Grenoble (FR)
(72) Inventeur: CAMUS, Pascal, F-38450 Vif (FR)
(74) Mandataire: RACKETTE Partnerschaft Patentanwälte
(86) Numéro de dépôt international: PCT/EP2009/003208
(87) Numéro de publication internationale: WO 2009/135643

(56) Documents cités:
- WO-A-02/070905
- DE-U1- 29 812 707
- US-A1- 2003 024 078

## Description

### Domaine technique de l'invention

L'invention est relative à une agrafe de fixation de première et deuxième pièces l'une sur l'autre, la première pièce comprenant une ouverture pour le clippage de l'agrafe et la deuxième pièce étant équipée d'un tenon d'attache à insérer dans ladite ouverture, l'agrafe comprenant :
- une base sommitale,
- une paire de branches latérales externes élastiquement repoussées dans une direction latérale vers l'extérieur de l'agrafe, après un engagement axial desdites branches externes dans l'ouverture pour mettre en prise les branches externes et assurer le clippage de l'agrafe sur la première pièce,
- une paire de branches latérales internes, chacune adjacente à une branche externe associée, et délimitant, en combinaison avec la base sommitale, un logement central pour un engagement axial du tenon entre les branches internes.
- un élément d'accrochage porté par chaque branche interne en direction du logement central pour retenir le tenon dans le logement central.

### État de la technique

De telles agrafes de fixation trouvent de nombreuses applications en particulier dans l'industrie automobile pour assurer la fixation de deux pièces d'équipement d'un véhicule l'une sur l'autre. En particulier, l'agrafe peut être destinée à la fixation d'une garniture d'habillage sur un élément de structure du véhicule. Ces garnitures sont visibles à l'intérieur de l'habitacle et sa fixation doit être invisible pour des questions esthétiques.

Une agrafe de fixation du genre mentionné ci-dessus est décrite dans le document EP1482184 dans lequel l'agrafe de fixation comporte une base sommitale depuis laquelle s'étend une paire de branches latérales externes entre lesquelles est placée une paire de branches latérales internes également connectées à la base sommitale. Les branches externes, flexibles, comportent des moyens de clippage sur une ouverture de la première pièce. Chaque branche interne, adjacente à une branche externe associée, comporte une première portion raccordée à la base sommitale et prolongée par une deuxième portion repliée vers l'intérieur de l'agrafe en direction de la base sommitale. Chaque deuxième portion se compose d'une zone de pliage vers l'intérieur et d'une lame à débattement latéral libre. Les lames des deux branches internes, directement en regard l'une de l'autre, délimitent entre elles un logement central pour un engagement axial d'un tenon d'attache porté par la deuxième pièce. Chaque lame à débattement latéral libre porte un élément d'accrochage du tenon, dirigé en direction du logement central pour retenir le tenon à l'intérieur du logement central. Les éléments d'accrochage sont continuellement en saillie à l'intérieur du logement central, quel que soit l'état de l'agrafe, c'est-à-dire qu'elle soit clippée ou non sur la première pièce, et que le tenon de la deuxième pièce soit ou non engagé dans le logement central.

Il résulte d'une telle disposition saillante des éléments d'accrochage que l'engagement axial du tenon d'attache de la deuxième pièce provoque une détérioration externe du tenon, sous la forme d'une déformation superficielle permanente du type entailles ou rayures, engendrées axialement par les éléments d'accrochage. Une telle détérioration du tenon a pour conséquence d'abaisser la fiabilité de la fixation de la deuxième pièce, susceptible de vibration et donc de source de bruit, voire d'un déboîtement fortuit de la deuxième pièce. De plus, les efforts de mise en place de l'agrafe sur le tenon d'attache sont élevés compte tenu de l'interaction entre les éléments d'accrochage et le tenon.

D'autre part, à partir de l'organisation normale où la deuxième pièce est fixée sur la première pièce au moyen de l'agrafe en position clippée, tout déplacement axial du tenon (résultant d'un effort axial appliqué sur ce dernier) provoque une sortie axiale correspondante de l'agrafe (grâce à la prise des éléments d'accrochage dans le tenon) par rapport à l'ouverture de la première pièce. Ce mouvement axial de l'agrafe s'accompagne d'un écartement latéral progressif des éléments d'accrochage, impliquant une diminution de la retenue envers la deuxième pièce. La fixation de l'agrafe sur la deuxième pièce décroît donc progressivement dès le début de la sortie axiale de l'agrafe, et bien que le clippage de l'agrafe sur la première pièce n'ait pas cessé. Autrement dit, dès le début de la sortie axiale de l'agrafe, la qualité de la retenue de la deuxième pièce par l'agrafe décroît en proportion inverse à la valeur du déplacement axial de l'agrafe, avec pour conséquence d'abaisser la fiabilité de la fixation de la deuxième pièce, susceptible de vibration et donc de source de bruit. En cas de démontage volontaire de la fixation entre les pièces, un glissement est même susceptible d'intervenir entre l'agrafe et le tenon d'attache de la deuxième pièce.

### Objet de l'invention

L'objet de l'invention consiste à réaliser une agrafe de fixation qui soit facile à mettre en place et qui améliore la fixation des pièces entre elles.

L'agrafe de fixation selon l'invention est remarquable en ce que chaque branche interne comporte des moyens élastiques de déplacement latéral de l'élément d'accrochage correspondant, pour occuper sélectivement une position de verrouillage en saillie à l'intérieur du logement central pour bloquer axialement le tenon, ou une position de libération du tenon dégagée du logement central, et en ce que l'agrafe est dotée de moyens d'actionnement du déplacement des éléments d'accrochage vers leurs positions de verrouillage, commandés automatiquement par le clippage de l'agrafe sur la première pièce.

L'enclenchement des éléments d'accrochage dans le tenon d'attache se pratique alors que le tenon est déjà axialement en place dans le logement central de l'agrafe. Il n'y a aucune détérioration externe causée par le montage et les efforts de mise en place de l'agrafe sur le tenon sont faibles. D'autre part, la position de verrouillage reste appliquée tant que l'agrafe est en position clippée, c'est-à-dire tant que le clippage n'a pas cessé. Or le clippage ne cesse qu'après une course axiale prédéterminée de l'agrafe par rapport à la première pièce. Ainsi, la fixation entre l'agrafe et la deuxième pièce est maintenue fermement pendant le début de la sortie axiale de l'agrafe. Tant que le clippage de l'agrafe sur la première pièce ne cesse pas, la position de verrouillage est maintenue et la retenue de la deuxième pièce reste complète et fiable et aucune vibration n'est possible entre les deux pièces. La position de verrouillage étant maintenue pendant une course axiale déterminée de l'agrafe, les risques de glissement entre l'agrafe et le tenon d'attache de la deuxième pièce sont supprimés en cas de démontage volontaire.

Selon un mode de réalisation préférentiel, chaque branche interne comprend une première portion raccordée à la base sommitale et prolongée par une deuxième portion repliée vers l'extérieur de l'agrafe en direction de la base sommitale, chaque portion repliée comprenant une zone de pliage élastiquement déformable et une lame à débattement latéral libre portant l'élément d'accrochage correspondant, la zone de pliage assure une disposition de la lame partiellement intercalée latéralement entre la première portion et la branche externe adjacente, en maintenant latéralement une partie de lame au niveau d'un crochet de clippage porté ladite branche externe. Une telle configuration de l'agrafe constitue un mode de réalisation simple et fiable des moyens de déplacement latéral des éléments d'accrochage, et des moyens d'actionnement du déplacement vers leur position de verrouillage.

D'autres caractéristiques techniques peuvent être utilisées isolément ou en combinaison :
- chaque lame se décompose en un premier tronçon relié à la zone de pliage, dirigé dans la direction axiale de l'agrafe, et en un deuxième tronçon incliné latéralement vers l'intérieur de l'agrafe en s'approchant axialement de la base sommitale, la partie de lame maintenue latéralement au niveau du crochet de clippage étant positionnée le long du premier tronçon de lame,
- la première portion de chaque branche interne est équipée de griffes de retenue du tenon continuellement en saillie à l'intérieur du logement central,
- la première portion de chaque branche interne est munie d'une lumière de passage de l'élément d'accrochage porté par ladite branche interne,
- chaque élément d'accrochage comporte deux dents dirigées latéralement vers l'intérieur de l'agrafe et reliée dans une direction transversale de l'agrafe par un bord de compression incurvé latéralement vers l'extérieur de l'agrafe,
- chaque bord de compression comporte une dent auxiliaire dirigée latéralement vers l'intérieur de l'agrafe.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
- la figure 1 est une vue en perspective d'un exemple d'agrafe de fixation selon l'invention,
- les figures 2 et 3 sont des exemples respectivement de deuxième et première pièces à assembler l'une sur l'autre au moyen de l'agrafe de la figure 2,
- la figure 4 illustre l'agrafe et le deuxième pièce après une première étape d'assemblage,
- les figures 5 et 6 représentent l'agrafe et les deux pièces après une deuxième étape d'assemblage.

### Description d'un mode préférentiel de l'invention

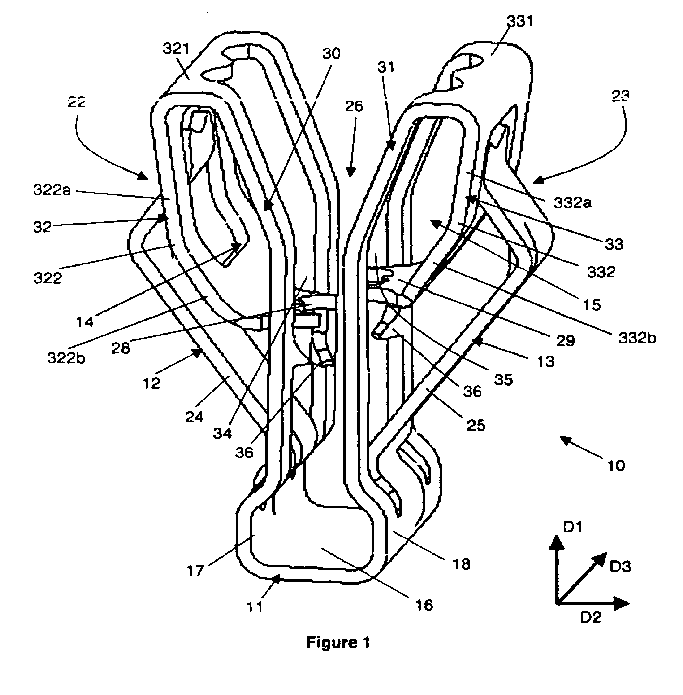

Sur les figures 1 à 6, l'agrafe de fixation 10 illustrée présente une forme de cavalier à deux U superposés, imbriqués l'un dans l'autre. L'agrafe 10 se compose à cet effet d'une base sommitale 11, à partir de laquelle s'étend, dans une direction axiale D1 de l'agrafe 10, une paire de branches latérales externes 12, 13 flexibles décalées entre elles dans une direction latérale D2 de l'agrafe 10. Entre les branches externes 12, 13 est agencée une deuxième paire de branches latérales internes 14, 15 décalées entre elles dans la direction latérale D2. Les branches internes 14, 15 sont sensiblement parallèles entre elles et sont également dirigées dans la direction axiale D1. Les branches 12 à 15 sont toutes disposées dans un même plan incluant les directions axiale et latérale D1, D2.

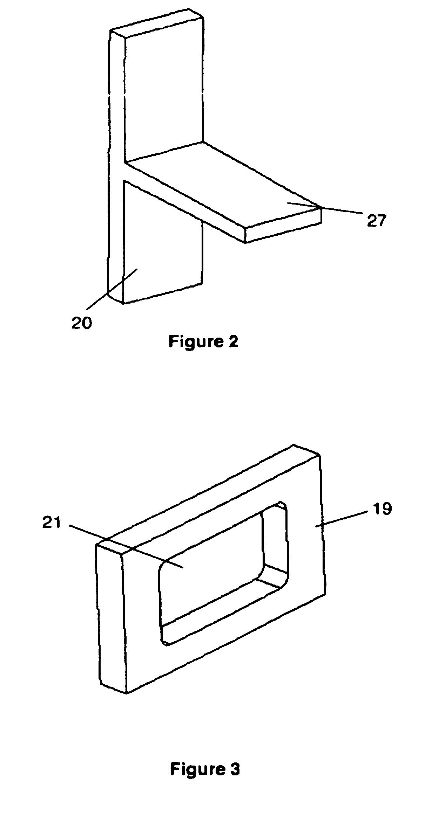

L'agrafe de fixation 10 permet d'assurer la fixation de deux pièces l'une sur l'autre, ces pièces étant formées par exemple par des pièces d'équipement d'un véhicule automobile. Les pièces sont désignées par les références 19, 20. La première pièce 19 (figure 3), ayant une fonction de support de l'ensemble, comporte une ouverture 21 dans laquelle est engagée axialement l'agrafe 10 pour son clippage. La deuxième pièce 20 (figure 2) est quant à elle accrochée sur l'agrafe de fixation 10, préalablement à l'étape de clippage de l'agrafe 10 sur la première pièce 19.

La base sommitale 11 a une forme générale de U, et comporte une portion intermédiaire 16 incluse dans la direction latérale et dans une direction transversale D3 perpendiculaire aux deux autres directions. Les côtés latéraux de la portion intermédiaire 16 sont reliés à des bords relevés 17, 18 dans la direction axiale D1.

Les branches latérales externes 12, 13 sont élastiquement repoussées dans la direction latérale D2 vers l'extérieur de l'agrafe 10, après un engagement axial desdites branches externes 12, 13 dans l'ouverture 21 pour mettre en prise les branches externes 12, 13 et assurer le clippage de l'agrafe 10 sur la première pièce 19. À cet effet, chaque branche externe 12, 13 comporte un crochet de clippage 22, 23 en forme de creux, relié à un bord relevé 17, 18 correspondant par une lame flexible 24, 25 inclinée latéralement vers l'intérieur de l'agrafe 10 en s'approchant axialement de la base sommitale 11. Pour chaque branche externe 12, 13, le crochet de clippage 22, 23 conjugué à sa jonction sensiblement à angle droit avec la lame flexible 24, 25 associée constitue un moyen de clippage à franchissement de point dur sur les bords de l'ouverture 21 de la première pièce 19. Le mouvement latéral des crochets 22, 23 est notamment le résultat de la flexion élastique des lames flexibles 24, 25.

Pour chaque branche externe 12, 13, la zone de jonction entre le bord relevé 17, 18 de la base sommitale 11 et la lame flexible 24, 25 correspondante comporte deux plis successifs, décalés dans la direction axiale D1 et de courbures inversées : un premier pli connecté au bord relevé 17, 18 et dirigé vers l'intérieur de l'agrafe 10, et un deuxième pli relié à la lame flexible 24, 25 et dirigé vers l'extérieur de l'agrafe 10. La présence combinée des deux plis successifs a pour effet d'améliorer la répartition des contraintes mécaniques.

Les branches latérales internes 14, 15, chacune adjacente latéralement à une branche externe 12, 13 associée, délimitent en combinaison avec la base sommitale 11 un logement central 26 pour un engagement axial, entre les branches internes 14, 15, d'un tenon d'attache 27 en forme de nervure équipant la deuxième pièce 20 et à insérer dans l'ouverture 21. De la manière décrite plus loin, chaque branche interne 14, 15 porte un élément d'accrochage 28, 29 dirigé latéralement vers l'intérieur de l'agrafe 10 en direction du logement central 26 pour retenir le tenon 27 dans le logement central 26.

Chaque branche interne 14, 15 comprend une première portion raccordée à la base sommitale 11, respectivement repérées 30, 31 pour les branches 14, 15. Chaque première portion 30, 31 est prolongée par une deuxième portion repliée 32, 33 vers l'extérieur de l'agrafe 10 en direction de la base sommitale 11. Chaque portion repliée 32, 33 comprend une zone de pliage 321, 331 élastiquement déformable et une lame 322, 332 à débattement latéral libre portant l'élément d'accrochage 28, 29 correspondant.

Chaque lame 322, 332 se décompose en un premier tronçon 322a, 332a relié à la zone de pliage 321, 331, dirigé sensiblement dans la direction axiale D1 de l'agrafe 10, et en un deuxième tronçon 322b, 332b incliné latéralement vers l'intérieur de l'agrafe 10 en s'approchant axialement de la base sommitale 11.

La zone de pliage 321, 331 assure une disposition de la lame 322, 332 partiellement intercalée latéralement entre la première portion 30, 31 et la branche externe 12, 13 adjacente, en positionnant latéralement, toutefois, une partie de lame au niveau du crochet de clippage 22, 23 porté la branche externe 12, 13 adjacente. La partie de lame positionnée latéralement au niveau du crochet de clippage, c'est-à-dire dans un même plan latéral que le fond du crochet de clippage 22, 23 porté par la branche externe 12, 13 adjacente, est positionnée le long du premier tronçon 322a, 332a de lame, tandis que le reste de la lame 322, 332, notamment le deuxième tronçon 322b, 332b, est strictement intercalée latéralement entre la première portion 30, 31 et la branche externe 12, 13 adjacente. Les éléments d'accrochage 28, 29 sont agencés aux extrémités libres des deuxièmes tronçons 322b, 332b. Le maintien latéral en position d'une partie de lame 322, 332 au niveau du fond du crochet de clippage 22, 23 se pratique au travers d'un passage ménagé latéralement dans l'épaisseur du fond du crochet de clippage 22, 23, évitant tout contact direct entre ladite partie de lame et le crochet de clippage 22, 23.

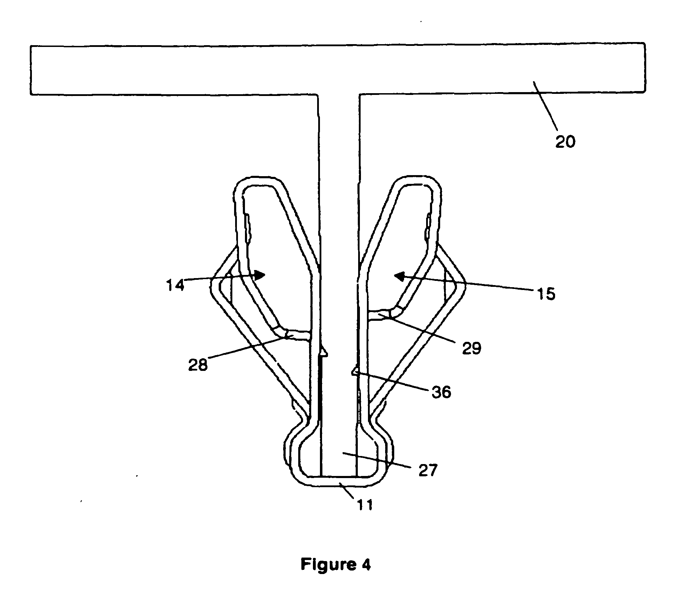

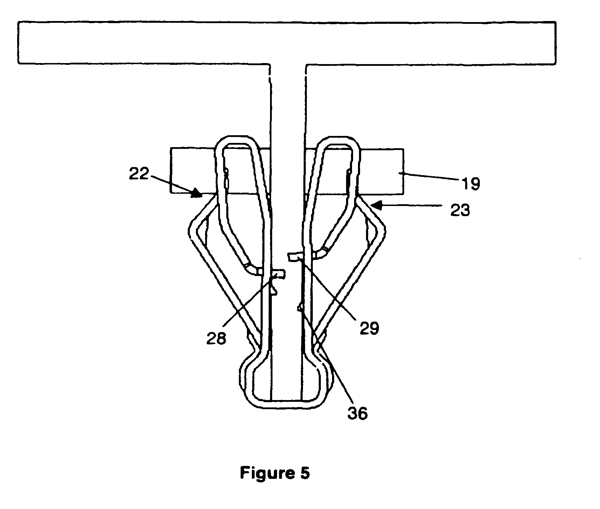

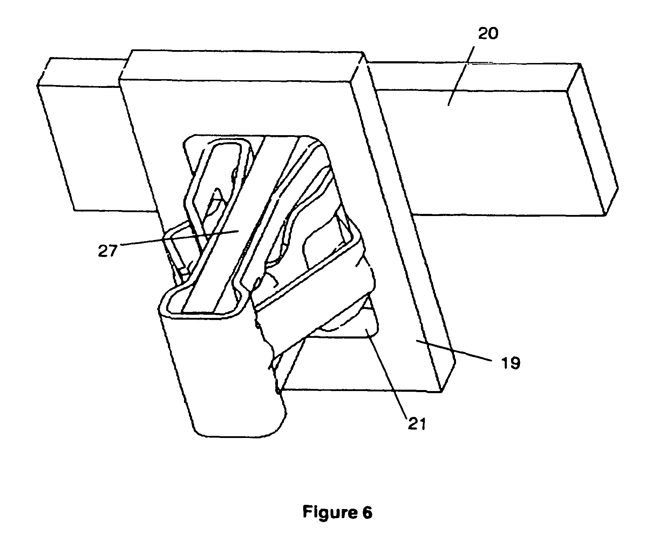

Il résulte de la courbure et de l'élasticité des zones de pliage 321, 331, éventuellement combinée à l'élasticité en flexion des lames 322, 332, que chaque portion repliée 32, 33 constitue des moyens élastiques de déplacement latéral de l'élément d'accrochage 28, 29 correspondant, pour que ce dernier puisse varier sélectivement entre une position de verrouillage (figures 5 et 6) en saillie à l'intérieur du logement central 26 pour bloquer axialement le tenon 27, ou une position de libération (figure 4) du tenon 27 dégagée du logement central 26, c'est-à-dire à l'extérieur du logement 26. Les parties de lame maintenues latéralement au niveau des crochets de clippage 22, 23 forment des moyens d'actionnement du déplacement des éléments d'accrochage 28, 29 vers leurs positions de verrouillage, lesquels moyens d'actionnement sont eux-mêmes commandés automatiquement par l'action de clippage de l'agrafe 10 sur la première pièce 19. Dans la position de libération, les éléments d'accrochage 28, 29 sont à l'extérieur du logement 26 pour libérer le tenon 27 rendre ce dernier retirable axialement depuis le logement 26.

Les branches interne 14, 15 et externe 12, 13 associées, c'est-à-dire directement adjacentes, sont situées au même niveau dans la direction transversale D3 de l'agrafe 10. Pour permettre à chaque élément d'accrochage 28, 29 de varier entre sa position de verrouillage et sa position de libération, la première portion 30, 31 de chaque branche interne 14, 15 est munie d'une lumière de passage 34, 35 de l'élément d'accrochage 28, 29 porté par ladite branche interne 14, 15.

La première portion 30, 31 de chaque branche interne 14, 15 est équipée de griffes de retenue 36 du tenon d'attache 27. Les griffes de retenue 36 sont dirigées vers l'intérieur de l'agrafe 10. Comme le logement central 26 est délimité latéralement par les premières portions 30, 31 directement en regard l'une de l'autre, les griffes de retenue 36 sont continuellement en saillie à l'intérieur du logement central 36, quel que soit l'état de l'agrafe 10, c'est-à-dire qu'elle soit clippée ou non sur la première pièce 19, et que le tenon 27 de la deuxième pièce 20 soit ou non engagé dans le logement central 36. De telles griffes de retenue 36 ont pour rôle de maintenir en place le tenon d'attache 27 à l'intérieur du logement central 26 directement au moment de son engagement axial, par une mise en prise des griffes 36 dans les faces externes du tenon 27. Ce maintien en place du tenon 27 par les griffes 36 est automatique pour garantir un pré-montage de la deuxième pièce 20 avec l'agrafe 10 (première étape d'assemblage : figure 4) avant que n'intervienne le déplacement des éléments d'accrochage 28, 29 vers leurs positions de verrouillage au moment du clippage de l'agrafe 10 sur la première pièce 19 (deuxième étape d'assemblage : figures 5 et 6).

Comme il l'est visible sur la figure 1, chaque élément d'accrochage 28, 29 comporte deux dents principales dirigées latéralement vers l'intérieur de l'agrafe 10, décalées entre elles dans la direction transversale D3, et reliée dans la direction transversale D3 de l'agrafe 10 par un bord de compression incurvé latéralement vers l'extérieur de l'agrafe 10. Dans la variante représentée, chaque bord de compression comporte une dent auxiliaire dirigée latéralement vers l'intérieur de l'agrafe 10. L'extrémité de la dent auxiliaire est décalée vers l'extérieur de l'agrafe 10 par rapport aux extrémités des dents principales.

Il convient de préciser que les dents principales et le bord de compression incurvé présentent deux fonctions distinctes. Les dents, pointues, constituent une zone d'agressivité amorçant rapidement la pénétration des éléments d'accrochage 28, 29 dans le tenon d'attache 27, tandis que les bords de compression incurvés ont pour rôle d'augmenter progressivement la surface de contact entre les éléments d'accrochage 28, 29 et le tenon d'attache 27. La pénétration profonde des dents principales augmente la tenue mécanique du montage. La dent auxiliaire est utilisée dans le cas où la matière du tenon d'attache 27 est relativement tendre, pour constituer un élément de secours palliant à la faible résistance mécanique du tenon 27.

Dans une première étape d'assemblage (figure 4), il convient d'engager axialement le tenon d'attache 27 dans le logement central 26, entre les branches internes 14, 15. Grâce aux griffes de retenue 36 de pré-montage prévues sur les premières portions 30, 31 des branches internes 14, 15 pour pénétrer latéralement dans le tenon 27 pendant son engagement axial, l'agrafe 10 est automatiquement rendue solidaire de la deuxième pièce 20, mais la retenue axiale n'est pas encore maximale.

Ensuite, dans une deuxième étape d'assemblage (figures 5 et 6), l'engagement axial dans l'ouverture 21 de la première pièce 19 des branches externes 12, 13 de l'agrafe 10, accompagnées du tenon 27 de la deuxième pièce 20, provoque un rapprochement latéral des branches externes 12, 13, plus précisément des crochets de clippage 22, 23 l'un vers l'autre. Ce mouvement des crochets 22, 23 se pratique par flexion des lames flexibles 24, 25, et se poursuit jusqu'à autoriser le franchissement du point dur entre les lames 24, 25 et les crochets 22, 23. Au-delà, le retour élastique des lames flexibles 24, 25, combiné à l'inclinaison des bords des crochets 22, 23 provoque le coulissement axial de l'agrafe 10 le long de l'ouverture 21 jusqu'à venir mettre en prise les crochets de clippage 22, 23 des branches externes 12, 13 sur les bords de l'ouverture 21 de la première pièce 19. Les dimensions de l'ouverture 21 dans la direction latérale D2 sont légèrement inférieures à la distance entre les crochets de clippage 22, 23 lorsque les branches externes 12, 13 sont dans leur configuration naturelle, c'est-à-dire exempte de contraintes extérieures. De cette manière, lorsque les crochets 22, 23 sont en prise sur les bords de l'ouverture 21, les branches externes 12, 13 sont légèrement fléchies en direction de l'intérieur de l'agrafe 10, de sorte à être naturellement rappelées vers l'extérieur de manière permanente et à assurer le clippage de l'agrafe 10 sur la première pièce 19.

De manière complémentaire, la partie de lame 322, 332 prévue pour être disposée latéralement au même niveau que le fond du crochet de clippage 22, 23 de la branche externe 12, 13 adjacente, occupe une telle position en particulier lorsque ladite branche externe 12, 13 se trouve dans sa configuration naturelle. Il en résulte qu'en position clippée de l'agrafe 10, les parties de lames 322, 332 prévues pour être au même niveau latéralement que les crochets 22, 23 subissent un rapprochement latéral (par flexion des zones de pliage 321, 331 éventuellement combinée à une flexion de la lame 322, 332) de même valeur que le rapprochement des crochets de clippage 22, 23. Ce rapprochement des parties de premier tronçon 322a, 332a de lame 322, 332 provoque un rapprochement proportionnellement supérieur des éléments d'accrochage 28, 29 l'un vers l'autre.

La mise en place des éléments d'accrochage 28, 29 dans le tenon d'attache 27 se pratique donc alors que le tenon 27 est déjà axialement en place dans le logement central 26. Il n'y a aucune détérioration causée par le montage.

À l'état assemblé, les bords des crochets 22, 23 du côté de la jonction aux lames flexibles 24, 25 étant inclinés ont pour effet de créer une compression axiale permanente entre les pièces 19, 20. Lorsqu'un effort est appliqué axialement sur le tenon d'attache 27 tendant à éloigner les pièces 19, 20, ces bords inclinés des crochets 22, 23 provoquent un rapprochement automatique de rappel des pièces 19, 20 l'une contre l'autre. Pendant toute ou partie du déplacement axial des bords inclinés des crochets 22, 23 le long de l'ouverture 21 avant le franchissement inverse du point dur, en fonction de la longueur du premier tronçon 322a, 332a de lame 322, 332, les éléments d'accrochage 28, 29 restent en position de verrouillage. Ainsi, contrairement à l'art antérieur, la fixation de l'agrafe 10 sur la deuxième pièce 20 est maintenue fermement pendant le début de la sortie axiale de l'agrafe 10 par rapport à l'ouverture 21 de la première pièce 19.

Pour le démontage, il est nécessaire d'appliquer un effort axial sur le tenon d'attache 27 suffisant pour dépasser le point dur entre les crochets 22, 23 et les lames flexibles 24, 25. Le clippage de l'agrafe 10 sur la première pièce 19 cesse au moment du dépassement axial du point dur, les éléments d'accrochage 28, 29 retournent élastiquement vers leurs positions de libération du tenon 27.

À titre d'exemple, l'agrafe 10 est réalisée par découpage et pliage d'un feuillard de tôle métallique d'une épaisseur relativement faible ayant subi des traitements thermiques adaptés pour lui conférer des propriétés d'élasticité. La deuxième pièce 20, et plus particulièrement le tenon d'attache 27, sont réalisés dans un matériau plus tendre que les éléments d'accrochage 28, 29 de l'agrafe 10 pour permettre aux dents principales et auxiliaire de ces derniers de s'enfoncer dans la matière du tenon 27. Par exemple, la matière choisie peut être une matière thermoplastique injectable.

La configuration en V des lames flexibles 24, 25 et des deuxièmes tronçons 322b, 332b facilitent la mise en place de l'agrafe sur la première pièce 19. D'autre part, à proximité des deuxièmes portions repliées, les premières portions 30, 31 sont inclinées latéralement vers l'intérieur de l'agrafe 10 en s'approchant de la base sommitale 11 de manière à former un V facilitant la mise en place du tenon d'attache 27 dans le logement 26.

## Revendications

1. Agrafe de fixation (10) de première et deuxième pièces (19, 20) l'une sur l'autre, la première pièce (19) comprenant une ouverture (21) pour le clippage de l'agrafe (10) et la deuxième pièce (20) étant équipée d'un tenon d'attache (27) à insérer dans ladite ouverture (21), l'agrafe (10) comprenant :
- une base sommitale (11),
- une paire de branches latérales externes (12, 13) élastiquement repoussées dans une direction latérale (D2) vers l'extérieur de l'agrafe (10), après un engagement axial desdites branches externes (12, 13) dans l'ouverture (21) pour mettre en prise les branches externes (12, 13) et assurer le clippage de l'agrafe (10) sur la première pièce (19),
- une paire de branches latérales internes (14, 15) raccordées à la base sommitale (11), chacune adjacente à une branche externe (12, 13) associée, et délimitant, en combinaison avec la base sommitale (11), un logement central (26) pour un engagement axial du tenon (27) entre les branches internes (14, 15),
- un élément d'accrochage (28, 29) porté par chaque branche interne (14, 15) en direction du logement central (26) pour retenir le tenon (27) dans le logement central (26),
agrafe (10) **caractérisée en ce que** chaque branche interne (14, 15) comporte des moyens élastiques de déplacement latéral de l'élément d'accrochage (28, 29) correspondant, pour occuper sélectivement une position de verrouillage en saillie à l'intérieur du logement central (26) pour bloquer axialement le tenon (27), ou une position de libération du tenon (27) dégagée du logement central (26), et **en ce que** l'agrafe (10) est dotée de moyens d'actionnement du déplacement des éléments d'accrochage (27, 28) vers leurs positions de verrouillage, commandés automatiquement par le clippage de l'agrafe (10) sur la première pièce (19).

2. Agrafe selon la revendication 1, **caractérisée en ce que** chaque branche interne (14, 15) comprend une première portion (30, 31) raccordée à la base sommitale (11) et prolongée par une deuxième portion (32, 33) repliée vers l'extérieur de l'agrafe (10) en direction de la base sommitale (11), chaque portion repliée (32, 33) comprenant une zone de pliage (321, 331) élastiquement déformable et une lame (322, 332) à débattement latéral libre portant l'élément d'accrochage (28, 29) correspondant, la zone de pliage (321, 331) assurant une disposition de la lame (322, 332) partiellement intercalée latéralement entre la première portion (30, 31) et la branche externe (12, 13) adjacente, en positionnant latéralement une partie de lame au niveau d'un crochet de clippage (22, 23) porté ladite branche externe (12, 13).

3. Agrafe selon la revendication 2, **caractérisée en ce que** chaque lame (322, 332) se décompose en un premier tronçon (322a, 332a) relié à la zone de pliage (321, 331), dirigé dans la direction axiale (D1) de l'agrafe (10), et en un deuxième tronçon (322b, 332b) incliné latéralement vers l'intérieur de l'agrafe (10) en s'approchant axialement de la base sommitale (11), la partie de lame maintenue latéralement au niveau du crochet de clippage (22, 23) étant positionnée le long du premier tronçon (322a, 332a) de lame.

4. Agrafe selon l'une des revendications 2 et 3, **caractérisée en ce que** la première portion (30, 31) de chaque branche interne (14, 15) est équipée de griffes de retenue (36) du tenon (27) continuellement en saillie à l'intérieur du logement central (26).

5. Agrafe selon l'une des revendications 2 à 4, **caractérisée en ce que** la première portion (30, 31) de chaque branche interne (14, 15) est munie d'une lumière de passage (34, 35) de l'élément d'accrochage (28, 29) porté par ladite branche interne (14, 15).

6. Agrafe selon l'une des revendications 1 à 5, **caractérisée en ce que** chaque élément d'accrochage (28, 29) comporte deux dents dirigées latéralement vers l'intérieur de l'agrafe (10) et reliée dans une direction transversale (D3) de l'agrafe (10) par un bord de compression incurvé latéralement vers l'extérieur de l'agrafe (10).

7. Agrafe selon la revendication 6, **caractérisée en ce que** chaque bord de compression comporte une dent auxiliaire dirigée latéralement vers l'intérieur de l'agrafe (10).

## Patentansprüche

1. Klammer zum Befestigen (10) eines ersten und eines zweiten Teiles (19, 20) aneinander, wobei das erste Teil (19) eine Öffnung (21) zum Einrasten der Klammer (10) und das zweite Teil (20) einen Befestigungszapfen (27) aufweist, der in die Öffnung (21) einfügbar ist, wobei die Klammer (10)
- eine Basisspitze (11),
- ein Paar äußere Seitenarme (12, 13), die elastisch in eine seitliche Richtung (D2) in Richtung der Außenseite der Klammer (10) nach einem axialen Eingriff der äußeren Arme (12, 13) in der Öffnung (21) zurückgedrückt sind, um die äußeren Arme (12, 13) in Eingriff zu bringen und das Einrasten der Klammer (10) an dem ersten Teil (19) sicherzustellen,
- ein Paar innere Seitenarme (14, 15), die mit der Basisspitze (11) verbunden sind, wobei jeder benachbart zu einem zugehörigen äußeren Arm (12, 13) angeordnet ist und zusammen mit der Basisspitze (11) eine mittige Aufnahme (26) für einen axialen Eingriff des Zapfens (27) zwischen den inneren Armen (14, 15) begrenzt, und
- ein Befestigungselement (28, 29) aufweist, das von jedem inneren Arm (14, 15) in Richtung der mittigen Aufnahme (26) getragen ist, um den Zapfen (27) in der mittigen Aufnahme (26) zurückzuhalten,
wobei die Klammer (10) **dadurch gekennzeichnet ist, dass** jeder innere Arm (14, 15) elastische Mittel zum seitlichen Verschieben des zugehörigen Befestigungselements (28, 29) aufweist, um wahlweise eine vorstehende Verriegelungsstellung im Inneren der mittigen Aufnahme (26), um den Zapfen (27) axial zu blockieren, oder eine Freigabestellung des von der mittigen Aufnahme (26) gelösten Zapfens (27) einzunehmen, und dadurch,
dass die Klammer (10) mit Betätigungsmitteln zum Verschieben der Befestigungselemente (27, 28) in ihre Verriegelungsstellungen versehen ist, die automatisch durch das Einrasten der Klammer (10) an dem ersten Teil (19) gesteuert sind.

2. Klammer nach Anspruch 1, **dadurch gekennzeichnet, dass** jeder innere Arm (14, 15) einen ersten Abschnitt (30, 31) aufweist, der mit der Basisspitze (11) verbunden und durch einen zweiten Abschnitt (32, 33) verlängert ist, der in Richtung der Außenseite der Klammer (10) und in Richtung der Basisspitze (11) umgebogen ist, wobei jeder umgebogene Abschnitt (32, 33) einen elastisch verformbaren Biegebereich (321, 331) und ein Plättchen (322, 332) mit freiem seitlichen Federweg aufweist, das das zugehörige Befestigungselement (28, 29) trägt, wobei der Biegebereich (321, 331) eine Anordnung des Plättchens (322, 332), das teilweise seitlich zwischen dem ersten Abschnitt (30, 31) und dem benachbarten äußeren Arm (12, 13) angeordnet ist, sicherstellt, indem ein Teil des Plättchens auf einer Ebene mit einem von dem äußeren Arm (12, 13) getragenen Einrasthaken (22, 23) seitlich positioniert ist.

3. Klammer nach Anspruch 2, **dadurch gekennzeichnet, dass** jedes Plättchen (322, 332) aus einem ersten Teilstück (322a, 332a), das mit dem Biegebereich (321, 331) verbunden und in eine axiale Richtung (D1) der Klammer (10) ausgerichtet ist, und aus einem zweiten Teilstück (322b, 332b) gebildet ist, das seitlich in Richtung der Innenseite der Klammer (10) geneigt ist und sich axial der Basisspitze (11) nähert, wobei der Teil des Plättchens, der seitlich auf einer Ebene mit dem Einrasthaken (22, 23) gehalten ist, entlang des ersten Teilstücks (322a, 332a) des Plättchens angeordnet ist.

4. Klammer nach einem der Ansprüche 2 und 3, **dadurch gekennzeichnet, dass** der erste Abschnitt (30, 31) jedes inneren Arms (14, 15) mit Haltegreifern (36) des Zapfens (27) ausgestattet ist, die ständig im Inneren der mittigen Aufnahme (26) vorstehen.

5. Klammer nach einem der Ansprüche 2 bis 4, **dadurch gekennzeichnet, dass** der erste Abschnitt (30, 31) jedes inneren Arms (14, 15) mit einer Durchgangsöffnung (34, 35) des von dem inneren Arm (14, 15) getragenen Befestigungselements (28, 29) ausgestattet ist.

6. Klammer nach einem der Ansprüche 1 bis 5, **dadurch gekennzeichnet, dass** jedes Befestigungselement (28, 29) zwei Zähne aufweist, die seitlich in Richtung der Innenseite der Klammer (10) ausgerichtet und in einer Querrichtung (D3) der Klammer (10) durch einen seitlich in Richtung der Außenseite der Klammer (10) gekrümmten Kompressionsrand verbunden sind.

7. Klammer nach Anspruch 6, **dadurch gekennzeichnet, dass** der Kompressionsrand einen zusätzlichen Zahn aufweist, der seitlich in Richtung der Innenseite der Klammer (10) ausgerichtet ist.

## Claims

1. A clip (10) for fixing together first and second parts (19, 20), the first part (19) comprising an aperture (21) for clipping the clip (10) and the second part (20) being equipped with a fastening prong (27) to be inserted in said opening (21), the clip (10) comprising:
- a base vertex (11),
- a pair of lateral external branches (12, 13) spring-loaded in a lateral direction (D2) toward the exterior of the clip (10) after axial engagement of said external branches (12, 13) into the opening (21) for interengagement of the external branches (12, 13) and clipping of the clip (10) onto the first part (19),
- a pair of lateral internal branches (14, 15) connected to the base vertex (11), each adjacent to an associated external branch (12, 13), and delimiting, in combination with the base vertex (11), a central housing (26) for axial engagement of the prong (27) between the internal branches (14, 15),
- an attachment element (28, 29) carried by each internal branch (14, 15) in the direction of the central housing (26) for retaining the prong (27) in the central housing (26),
which clip (10) is **characterized in that** each internal branch (14, 15) comprises spring means for lateral displacement of the corresponding attachment element (28, 29) for selectively occupying a locking position in which it projects into the central housing (26) for axially locking the prong (27) or a position in which it releases the prong (27) disengaged from the central housing (26), and **in that** the clip (10) is provided with means for actuating movement of the attachment elements (27, 28) toward their locking positions operated automatically by clipping the clip (10) onto the first part (19).

2. A clip according to claim 1, **characterized in that** each internal branch (14, 15) comprises a first portion (30, 31) connected to the base vertex (11) and extended by a second portion (32, 33) bent towards the exterior of the clip (10) in the direction of the base vertex (11), each bent portion (32, 33) including an elastically deformable bending area (321, 331) and a leaf spring (322, 332) with lateral relative free movement carrying the corresponding attachment element (28, 29), the bending area (321, 331) providing an arrangement of the leaf spring (322, 332) partially interleaved laterally between the first portion (30, 31) and the adjacent external branch (12, 13), laterally positioning a leaf spring portion at the level of a clipping hook (22, 23) carried by said external branch (12, 13).

3. A clip according to claim 2, **characterized in that** each leaf spring (322, 332) is divided into a first portion (322a, 332a) connected to the bending area (321, 331) directed in the axial direction (D1) of the clip (10) and a second portion (322b, 332b) laterally inclined toward the interior of the clip (10) and axially approaching the base vertex (11), the leaf spring portion held laterally at the level of the clipping hook (22, 23) being positioned along the first leaf spring portion (322a, 332a).

4. A clip according to either of claims 2 and 3, **characterized in that** the first portion (30, 31) of each internal branch (14, 15) is equipped with claws (36) for retaining the prong (27) projecting continuously into the central housing (26).

5. A clip according to any one of claims 2 to 4, **characterized in that** the first portion (30, 31) of each internal branch (14, 15) is provided with a slot (34, 35) through which is adapted to pass the attachment element (28, 29) carried by said internal branch (14, 15).

6. Clip according to any one of claims 1 to 5, **characterized in that** each attachment element (28, 29) includes two teeth directed laterally toward the interior of the clip (10) and connected in a transverse direction (D3) of the clip (10) by a compression edge curved laterally toward the exterior of the clip (10).

7. A clip according to claim 6, **characterized in that** each compression edge includes an auxiliary tooth directed laterally toward the interior of the clip (10).
